# EUROPEAN PATENT SPECIFICATION

(11) **EP 1 921 478 B1**
(45) Date of publication and mention of the grant of the patent: **05.01.2011**
(21) Application number: 07021404.4
(22) Date of filing: 02.11.2007
(51) Int. Cl.: G02B 6/44

(54) **Telecommunication optical fiber cable**
Glasfaserkabel für Telekommunikation
Câble de télécommunications à fibre optique

(30) Priority: 10.11.2006 FR 0609834
(43) Date of publication of application: 14.05.2008
(73) Proprietor: Draka Comteq B.V., 1083 HJ Amsterdam (NL)
(72) Inventor: Tatat, Olivier, 62231 Sangatte (FR); Bonicel, Jean-Pierre, 92500 Rueil Malmaison (FR)
(74) Representative: Blokland, Arie

(56) References cited:
- EP-A1- 0 240 165
- EP-A1- 0 468 878
- EP-A1- 1 052 533
- WO-A-01/98810
- FR-A1- 2 214 900
- FR-A1- 2 815 141
- US-A1- 2006 147 164
- US-B1- 6 366 725

## Description

The present invention relates to the field of optical fiber telecommunication cables and more particularly of so-called micromodule cables in which optical fibers are grouped to form a plurality of micromodules gathered together as a cable.

Optical fiber cables including several optical fiber micromodules are known, notably from documents FR-A-2 665 266 and FR-A-2 706 218, each optical fiber micromodule of being enveloped by a retaining jacket enclosing several fibers.

As known *per se*, a micromodule telecommunication cable comprises a plurality of optical fibers grouped in micromodules. A micromodule may contain about 2 to 24 fibers enveloped together in a flexible and fine retaining jacket. The jackets for retaining the micromodules and the jackets of optical fibers may be coloured in order to facilitate location of the fibers in the cable, for example during a connection operation. The micromodules are disposed in a central cavity of the cable with a jacket surrounding this cavity receiving the micromodules. The jacket of the cable may be of polymer, generally of polyethylene; it may be extruded inline during the formation of the cable as the fibers are gradually grouped into micromodules. The jacket of the cable may also contain reinforcing members positioned longitudinally. Indeed, the jacket consists of moisture-proof material but not very mechanically rigid and sensitive to changes in temperature. The reinforcing members are thus used for limiting the deformations of the cable due to tensile forces, for example during the laying of the cable in a duct, and for limiting the axial deformations of the cable upon compression and expansion when the latter is subject to significant changes in temperature, by compensating the compression or expansion forces induced by the jacket.

Indeed, the telecommunication optical fiber cables are generally intended to be laid in ducts of metropolitan or long distance transmission systems. To allow the cable to be laid in a duct, the latter should have both a certain robustness in order to withstand the traction and the mechanical stresses of the laying and some flexibility along at least one folding direction in order to allow it to be inserted into the ducts of the system. Further, a telecommunication cable should generally withstand conditions of use over a large range of temperatures which may range from -40°C to +60°C, which may cause expansions and compressions in the jacket of the cable. With the reinforcing members of the cable, the mechanical stresses experienced by the cable during the laying in a duct may be absorbed and the optical fibers positioned in the cable may thereby be protected. Such reinforcing members may be located in the central area of the cable or at the periphery thereof.

With development of telecommunications optical fiber systems right up to the subscriber, known as Fiber to the Home (FTTH) or Fiber to the Curb (FTTC), an attempt is made to produce cables with large capacity containing a large number of optical fibers. Such cables are intended to be installed in an aggressive urban environment, for example sewers, where they should resist to rodents and to corrosion. Moreover, such cables should also provide individual access to each micromodule for distribution in a given building. In particular, each micromodule picked up during a by-pass operation, should be able to be drawn over several tens of meters in order to reach an optical box for junction with a telecommunication system of a given building.

Document EP-A-1 052 533 describes a method for accessing one or more optical fibers in a sheath disposed in a telecommunications cable. Two cut-outs are made in the sheath in order to create a first aperture through which a fiber is cut and a second aperture through which the cut fiber is drawn in order to be by-passed. This document discloses an optical fiber cable having a jacket forming a cavity which contains a telecommunications core. Said core is formed by a plurality of colored optical fiber buffer tubes or sheaths. This document fails to disclose any lubricant in the cavity.

FR 2 214 900 discloses a telecommunications cable comprising a central cavity enclosing several bundles of optical fibers. The core of said cable is surrounded by a protective jacket, a metal layer and an external jacket. The optical fibers are in a stranded configuration.

EP 0 468 878 discloses a telecommunications cable comprising groups of parallel oriented optical fibers within a cavity. This document fails to disclose the presence of any lubricant within the cavity.

US 2006/147164 discloses a telecommunications cable comprising bundles of optical fibers arranged within an inner tube made of polyolefin. This document clearly teaches that optical fibers and microbundles should be SZ stranded.

US 6,366,725 discloses a telecommunications cable comprising bundles of optical fibers, wherein the core is surrounded by an outer cladding made of stainless steel. Said outer cladding is not located on the inner periphery of said jacket. This document fails to disclose the presence of any lubricant within the cavity.

Document WO-A-01/98810 describes a continuously accessible optical fiber particularly suited for local subscriber loops and to interior cablings. This cable comprises a protective jacket surrounding a preferably oval cavity receiving optical fiber micromodules. The cable described in this document may receive about 12 to 96 optical fibers. The fibers are arranged in the cable so that they occupy the major portion of the cavity along the major axis but they leave significant clearance in the minor axis of the cavity. This clearance allows changes in overlength of the fibers in the cable. The jacket comprises reinforcing members positioned on either side of the cavity along the major axis. The cable is wound on a cable drum or bent during installation in a duct along the major axis, thereby benefitting from the large clearance in the minor axis. The optical fibers therefore have a certain degree of freedom within the cavity of the cable, providing absence of stresses upon lengthening the jacket under a certain tension or under the effect of thermal expansion or contraction. The jacket includes markings - coloured thin lines, fracture initiations or areas with thinner thickness - in order to indicate the areas where windows may be pierced for by-pass operations. A first access window may thus be opened in order to section a given micromodule and a second access window is opened for extracting the micromodule selected for the by-pass. This document fails to disclose any lubricant in the central cavity and does not disclose any sheath located on the inner periphery of the jacket.

The cable of document WO-A-01/98810 provides a by-pass of a micromodule extracted from the cable over a few tens of centimeters to several meters; but it does not provide a by-pass over several tens of meters. Further, the cable described in document WO-A-01/98810 is not suitable for installation in an aggressive environment such as sewers; de facto, a simple elastomer jacket is not sufficient for guaranteeing integrity of the optical fibers in an aggressive outdoor environment.

Also from document EP-A-0 240 165, a cable is known in which the optical fibers are positioned in parallel, i.e., not wound as helices or non-cabled. The optical fibers are then In contact with the inner wall of the jacket. This document proposes that the reinforcing members of the jacket be positioned in proximity to the fibers. The reinforcing members are thus located on the side interior to the curvature of the cable when the cable Is wound or bent. A neutral axis - or a zero stress line connects the reinforcing members and passes through the group of fibers. Thus, the fibers do not retract or do not lengthen when the cable is wound or unwound from a cable drum. Such an arrangement may only be applied in a cable which only comprises a rather limited number of optical fibers. This document fails to disclose any lubricant in the central cavity.

FR 2 815 141 discloses a telecommunications cable comprising a central cavity wherein super modules of optical fibers are located. This document fails to disclose the presence of any lubricant in the central cavity and any sheath located on the inner periphery of the jacket.

There is therefore a need for an outdoor cable which has a large capacity, of several hundreds of fibers, and which provides a by-pass of one or several micromodules over several tens of meters.

For this purpose, the invention proposes an optical fiber cable including a protective sheath and containing several hundreds of fibers grouped in micromodules positioned in parallel with a lubricant.

The sheath, for example of steel, provides a protection of the cable in an aggressive environment such as sewers. With the parallel arrangement of the micromodules - without any helical wounding - and the presence of lubricant, one or more micromodules may be extracted from a large amount of micromodules over a large distance. Such a cable is therefore particularly suited to an outdoor installation for distributing a large number of fibers.

The invention more particularly proposes a telecommunication optical fiber cable comprising:
- a longitudinal central cavity containing a lubricant and receiving micromodules of optical fibers disposed in parallel;
- a jacket surrounding the central cavity;
- a sheath located on the inner periphery of the jacket,
**characterized in that** the lubricant is a dry lubricant, the cable comprising more than a 100 optical fibers, and wherein the micromodules occupy 30% to 70% of the central cavity.

According to the embodiments, the cable of the invention may further comprise one or more of the following features:
- the sheath is an overlapping steel tape which may be corrugated;
- the cable further comprises reinforcing members disposed In the jacket in a plane off-centered with a median transverse plane of the cable;
- the cable further comprises at least one marking of an opening indicator window on the periphery of the cable, said marking being located on the side opposite to the reinforcing members with respect to the median transverse plane of the cable;
- the cable further comprises a protective envelope pressed against the inner periphery of the sheath;
- the protective envelope is in polyester;

The invention also proposes a method for extracting at least one micromodule from a cable according to the invention, comprising the steps:
- making a first opening in the cable in order to section at least one micromodule;
- making a second opening in the cable in order to extract said at least one sectioned micromodule;
said second opening being distant from the first opening by at least 5 meters.

Other features and advantages of the invention will become apparent upon reading the following description of embodiments of the invention, given as an example and with reference to the appended figure which shows a transverse sectional diagram of a cable according to the invention.

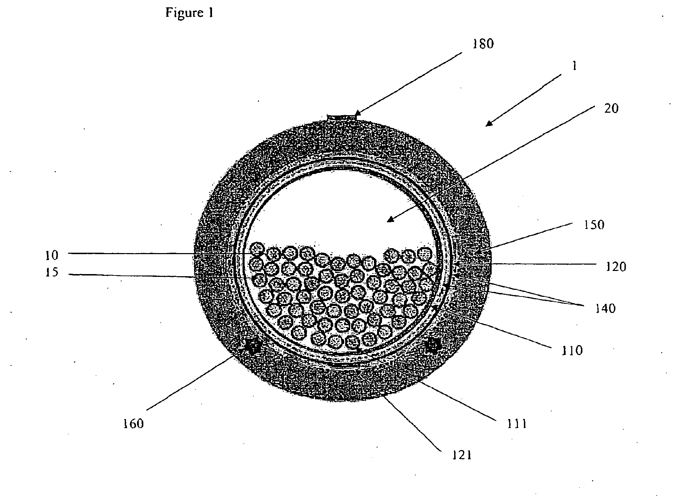

Cable 1 of Fig. 1 has a longitudinal central cavity 20 receiving the core of the cable consisting of micromodules 10 substantially parallel to each other grouping optical fibers 15 substantially parallel to each other. "Parallel optical fibers" means non-cabled optical fibers (i.e. which are not wound as helices or alternating SZ stranded). A jacket 150 surrounds this central cavity; the jacket 150 may be of polymer, for example of high density polyethylene; it has a good seal against moisture and some mechanical flexibility. The jacket 150 is extruded around the cavity 20 in which the micromodules 10 extend. When considering the cable in a transverse section, the jacket 150 has an inner periphery and an outer periphery, defined radially. The outer circumference of jacket 150 as well as central cavity 20 is preferably cylindrical of shape. The thickness of jacket 150 is preferably constant over the whole length of cable 1.

Fig. 1 shows a sheath 120 placed on the inner periphery of the jacket 150. This sheath 120 may consist of a corrugated stainless steel tape laid down longitudinally with overlapping; it is intended to form a protection against corrosion and against rodents, the cable 1 being intended for uses in sewers or outdoors. The type of stainless steel used is at least 304, or even 316, in order to guarantee good protection against corrosion. The steel tape is further corrugated in order to provide some flexibility upon installing the cable. Fig. 1 also shows that the sheath 120 has an overlapping area 121 of the tape.

In the cable of Fig. 1, each micromodule 10 comprises 12 optical fibers 15 and the cable comprises 60 micromodules. The cable of Fig. 1 therefore includes 720 optical fibers which only partly fill the central cavity 20. The cable according to the invention includes a large number of fibers - at least 100, or even several hundreds - and depending on the embodiments, it may have between 400 and 1,600 optical fibers distributed in micromodules of about 8 to 24 fibers for a cable diameter from about 20 mm to about 35 mm. In practice the number of micromodules is about 600-1000, and the outer diameter of a cable comprising 720 optical fibers is about 25 mm. With such a large number of fibers, extraction of a micromodule through an opening window requires maximum minimization of the friction between modules and provision of sufficient clearance between the micromodules. An overlength of the micromodules (and thus of the fibers) should also be provided inside the cavity of the cable, notably in order to be able to select some of them during a by-pass operation, but also for providing good weathering and mechanical behaviour of the cable.

In order to minimize friction between the micromodules, a jacket for retaining the micromodules may be selected such that their mutual friction coefficient is small, as mentioned in document WO-A-01/98810. But this document only provides for 12 to 96 fibers in the cable. The invention relates to a cable containing at least 100 fibers, or even more than 600 fibers; with hundreds of fibers in the cable, friction between micromodules is ineluctable. In this context, a jacket for retaining the micromodules in a flexible polymer, for example in an elastomer, may be selected instead In order to provide maximum flexibility to the core; now this type of materials generally has large friction coefficients.

In order to solve this friction problem between the micromodules and to allow a micromodule to be extracted from tens of them over more than 5 meters - from about 15 to 30 m - it is proposed that a lubricant be added into the core of the cable. The lubricant will be a dry lubricant such as talc, in order to avoid having to clean the extracted micromodules. By dry lubricant is meant a non-greasy lubricant.

A maximum filling coefficient of the cavity 20 is defined in order to guarantee sufficient clearance between the micromodules. This filling coefficient may be defined as the ratio between the sum of the transverse sections of all the micromodules 10 and the inner section of the cavity 20 defined by the inner wall of the steel sheath 120. This coefficient will be more or less significant depending on the length of the micromodules to be extracted; preferably it will be of the order of 0.30 to 0.35 but may attain 0.70.

Fig. 1 further shows a protective envelope 110 of the core which forms a protective contact interface between the micromodules 10 and the sheath 120. This protective envelope 110 may consist of a plastic tape, for example of polyester, with a thickness from 30 to 50 µm. This protective envelope 110 provides protection of the micromodules against the mechanical tool used for cutting the jacket 150 and the sheath 120 in order to form an opening indicator window during a by-pass operation; with the protective envelop, it is also possible to avoid any direct mechanical contact of the micromodules against the corrugated stainless steel of the sheath 120 or on the edge of its overlapping 121 which may deteriorate the micromodules. This protective envelope 110 is pressed against the inner wall of the steel sheath 120; it does not therefore clamp the micromodules and does not slow down their extraction through an opening window. The steel tape forming the sheath 120 may be laminated with a copolymer 140 so as to provide an adherent bond with the protective envelope 110 and the jacket 150. With the protective envelope 110, the lubricant introduced into the cavity 20 of the cable may further be retained therein.

The cable of Fig. 1 further comprises two reinforcing members 160 positioned longitudinally in the jacket 150. These reinforcing members 160 may be rods of glass-reinforced plastic, known as GRP, or stranded or single-strand galvanized steel rods or aramide-reinforced plastic rods or any other suitable longitudinal reinforcing member for stiffening a telecommunication cable. These reinforcing members 160 may be off-centered with a median transverse plane of the cable. Generally, the reinforcing members are positioned in the jacket of the cable by being diametrically opposite on either side of the cavity 20 containing the micromodules 10; with this arrangement of the reinforcing members, it is possible to define a preferential folding plane of the cable so that it may be inserted into the ducts of the telecommunication system for which it is intended. According to the invention, the reinforcing members 160 may be off-centered towards the same side of the jacket; they always define a folding axis, shifted relatively to a diameter of the cable, while clearing a larger space on the opposite side of the cable in order to provide access to the micromodules. Thus, when an opening window is cut in the cable in the opposite side, the reinforcing members are not touched and the continuity of the mechanical integrity of the cable is retained after cutting access windows. In a preferred embodiment the reinforcing members 160 are off-centered towards the same side of the jacket, in an area between 5°-85°, seen from the median transverse plane.

Fig. 1 shows opening indicator markings 180 located on the periphery of the cable; these markings indicate the areas in which opening windows may be cut out. Such windows prevent the cable from opening over its whole length. Such a window is a discrete part on the cable. Fig. 1 also shows that the protective envelope 110 and the sheath 120 each have an overlapping area 111, 121 of their tape. The tapes 110, 120 may actually be laid longitudinally with an overlap. If a mechanized cutting tool has to be used, the overlapping 121 of the tape of the sheath 120 will preferably be located away from the area in which an opening window may be cut out in order to avoid having to cut two thicknesses of steel. If the reinforcing members 160 are off-centered with respect to a transverse axis of the cable, as explained earlier, the overlapping area 121 of the steel tape of the sheath 120 will be located in the half cable containing the reinforcing members 160 and preferably still be located between both reinforcing members 160. Such an arrangement provides easier access to the micromodules and to the fibers through an opening window at the marking 180, the cutting of the jacket 150, the sheath 120 and the envelope 110 being carried out outside the overlapping areas 111, 121 and without interfering with the reinforcing members 160. If the aperture of the opening windows is made manually by taking off the overlap of the steel tape 120, the overlapping 121 of the tape of the sheath 120 would preferably be located just under the marking area 180; this overlapping area 121 will then be located on the side opposite to the reinforcing members 160 which preferably remain away from the access windows apertures. The overlapping areas 111, 121 may be located in the same place of the cable, i.e., having the same spherical coordinates when the cable is considered in a transverse section, but the position of the overlapping 111 of the protective envelope is not critical as it is easy to cut out.

The micromodule overlength introduced into the cable during manufacturing, the off-centering of the plane of the reinforcing members 160 with the diameter plane and the low filling rate of the cavity are such that they provide that the micromodules 10 are not subject to tensile stresses when the cable is wound with the plane of the carriers on the side of the wounding axis and are not excessive in overlength when the cable is wound with the plane of the carriers away from the winding axis.

Such an arrangement provides a large degree of freedom of the micromodules 10 relatively to each other and also provides possible extraction of one or several micromodules over a relatively large distance, larger than 5 meters, or even larger than 10 meters. It is understood that a micromodule contained in the cable according to the invention may be extracted over a distance of less than 5 meters, depending on the location of the junction boxes to be connected; nevertheless with the cable according to the invention, a micromodule may be extracted from tens of them over several tens of meters, i.e. a length of more than 25 meters.

## Claims

1. A telecommunication optical fibers cable comprising:
- a longitudinal central cavity (20) containing a lubricant and receiving micromodules (10) of optical fibers;
- a jacket (150) surrounding the central cavity;
- a sheath (120) located on the inner periphery of the jacket (150), **characterized in that** the lubricant is a dry lubricant, the cable comprising more than a 100 optical fibers and wherein the micromodules (10) occupy 30% to 70% of the central cavity (20), wherein the micromodules (10) are positioned in parallel.

2. The cable of claim 1, wherein the sheath (120) is an overlapping steel tape (121).

3. The cable of claim 2, wherein the steel tape (120) is corrugated.

4. The cable of any one of claims 1 to 3, further comprising reinforcing members (160) positioned in the jacket (150) in a plane off-centered with a median transverse plane of the cable,

5. The cable of claim 4, further comprising at least one opening indicator marking (180) on the periphery of the cable, the marking being situated on the opposite side of the reinforcing members with respect to the median transverse plane of the cable.

6. The cable of any one of claims 1 to 5, further comprising a protective envelope (110) pressed against the inner periphery of the sheath (120).

7. The cable of claim 6, wherein the protective envelope (110) is of polyester.

8. A method for extracting at least one micromodule In a cable according to any one of claims 1 to 7, the method comprising the steps of:
making a first opening in the cable in order to section at least one micromodule;
making a second opening in the cable in order to extract said at least one sectioned micromodule;
said second opening being distant from the first opening by at least 5 meters.

## Patentansprüche

1. Telekommunikations-Kabel mit optischen Fasern, umfassend:
- eine mittige Aushöhlung (20) in Längsrichtung, welche ein Schmiermittel enthält und Mikromodule (10) von optischen Fasern aufnimmt;
- eine Ummantelung (150), welche die mittige Aushöhlung umgibt;
- eine Umhüllung (120), welche an dem Innenumfang der Ummantelung (150) angeordnet ist,
**dadurch gekennzeichnet,**
**dass** das Schmiermittel ein Trockenschmiermittel ist, dass das Kabel mehr als 100 optische Fasern umfasst, und dass die Mikromodule (10) 30 % bis 70 % der mittigen Aushöhlung (20) einnehmen, wobei die Mikromodule (10) parallel zu einander angeordnet sind.

2. Kabel nach Anspruch 1, **dadurch gekennzeichnet, dass** die Umhüllung (120) ein überlappender Stahlstreifen (121) ist.

3. Kabel nach Anspruch 2, **dadurch gekennzeichnet, dass** der Stahlstreifen (120) gewellt ist.

4. Kabel nach einem der Ansprüche 1 bis 3, **dadurch gekennzeichnet, dass** das Kabel darüber hinaus Verstärkungsteile (160) umfasst, welche in der Ummantelung (150) in einer bezüglich einer medianen Querebene des Kabels exzentrischen Ebene angeordnet sind.

5. Kabel nach Anspruch 4, **dadurch gekennzeichnet, dass** das Kabel darüber hinaus mindestens eine eine Öffnung angebende Markierung (180) auf dem Umfang des Kabels umfasst, wobei die Markierung mit Bezug auf die mediane Querebene des Kabels auf der den Verstärkungsteilen gegenüberliegenden Seite angeordnet ist.

6. Kabel nach einem der Ansprüche 1 bis 5, **dadurch gekennzeichnet, dass** das Kabel darüber hinaus eine schützende Einhüllende (110) umfasst, welche gegen den Innenumfang der Umhüllung (120) gepresst ist.

7. Kabel nach Anspruch 6, **dadurch gekennzeichnet, dass** die schützende Einhüllende (110) aus Polyester ist.

8. Verfahren zur Entnahme mindestens eines Mikromoduls in einem Kabel nach einem der Ansprüche 1 bis 7, wobei das Verfahren die Schritte umfasst:
Ausbilden einer ersten Öffnung in dem Kabel, um mindestens ein Mikromodul zu zerlegen;
Ausbilden einer zweiten Öffnung in dem Kabel, um das mindestens eine zerlegte Mikromodul zu entnehmen;
wobei die zweite Öffnung um mindestens 5 Meter von der ersten Öffnung entfernt ist.

## Revendications

1. Câble de télécommunication en fibres optiques comprenant :
- une cavité centrale longitudinale (20) contenant un lubrifiant et recevant des micromodules (10) de fibres optiques ;
- une couche de protection (150) entourant la cavité centrale ;
- une gaine (120) placée sur la périphérie intérieure de la couche de protection (150), **caractérisé en ce que** le lubrifiant est un lubrifiant sec, le câble comprenant plus de 100 fibres optiques et dans lequel les micromodules (10) occupent 30% à 70% de la cavité centrale (20), dans lequel les micromodules (10) sont positionnés en parallèle.

2. Câble de la revendication 1, dans lequel la gaine (120) est un feuillard en acier (121) à chevauchement.

3. Câble de la revendication 2, dans lequel le feuillard en acier (120) est ondulé.

4. Câble de l'une quelconque des revendications 1 à 3, comprenant en outre des organes de renforcement (160) positionnés dans la couche de protection (150) dans un plan désaxé par rapport à un plan transversal médian du câble.

5. Câble de la revendication 4, comprenant en outre au moins une marque (180) d'indication d'ouverture sur la périphérie du câble, la marque étant positionnée sur le côté opposé des organes de renforcement par rapport au plan transversal médian du câble.

6. Câble de l'une quelconque des revendications 1 à 5, comprenant en outre une enveloppe de protection (110) pressée contre la périphérie intérieure de la gaine (120).

7. Câble de la revendication 6, dans lequel l'enveloppe de protection (110) est en polyester.

8. Procédé permettant d'extraire au moins un micromodule dans un câble selon l'une quelconque des revendications 1 à 7, le procédé comprenant les étapes qui consistent à :
réaliser une première ouverture dans le câble en vue de sectionner au moins un micromodule ;
réaliser une deuxième ouverture dans le câble en vue d'extraire ledit au moins un micromodule sectionné ;
ladite deuxième ouverture étant distante de la première ouverture d'au moins 5 mètres.
